# FASCICULE DE BREVET EUROPEEN

(11) **EP 3 465 614 B1**
(45) Date de publication et mention de la délivrance du brevet: **12.11.2025**
(21) Numéro de dépôt: 17726309.2
(22) Date de dépôt: 29.05.2017
(51) Int. Cl.: G06T 7/12, G06T 7/00

(54) **PROCEDE DE CARACTERISATION GEOMETRIQUE DES VOIES AERIENNES D'UN POUMON PAR IRM**
MRI-VERFAHREN ZUR GEOMETRISCHEN CHARAKTERISIERUNG VON PULMONALEN ATEMWEGEN
MRI METHOD FOR THE GEOMETRICAL CHARACTERISATION OF PULMONARY AIRWAYS

(30) Priorité: 27.05.2016 FR 1654812
(43) Date de publication de la demande: 10.04.2019
(73) Titulaire: Université de Bordeaux, 33000 Bordeaux (FR); L'Institut Polytechnique De Bordeaux, 33402 Talence Cedex (FR); Centre Hospitalier Universitaire de Bordeaux, 33404 Talence Cedex (FR); Centre National de la Recherche Scientifique, 75794 Paris Cedex 16 (FR); Institut National de la Santé et de la Recherche Médicale (INSERM), 75013 Paris (FR)
(72) Inventeur: DOURNES, Gael, 33300 Bordeaux (FR); BALDACCI, Fabien, 33600 Pessac (FR); LAURENT, François, 33000 Bordeaux (FR); BERGER, Patrick, 33700 Mérignac (FR)
(74) Mandataire: Cabinet Camus Lebkiri
(86) Numéro de dépôt international: PCT/EP2017/062925
(87) Numéro de publication internationale: WO 2017/203064

(56) Documents cités:
- US-B2- 8 233 964
- KIRALY A P ET AL: "Three-dimensional human airway segmentation methods for clinical virtual bronchoscopy", ACADEMIC RADIOLOGY, ELSEVIER, AMSTERDAM, NL, vol. 9, no. 10, 1 September 2002 (2002-09-01), pages 1153 - 1168, XP002330892
- ATILLA P. KIRALY ET AL: "Virtual bronchoscopy for quantitative airway analysis", SPIE - INTERNATIONAL SOCIETY FOR OPTICAL ENGINEERING. PROCEEDINGS, vol. 5746, 14 April 2005 (2005-04-14), US, pages 369, XP055344262
- GAËL DOURNES ET AL: "Quiet Submillimeter MR Imaging of the Lung Is Feasible with a PETRA Sequence at 1.5 T", RADIOLOGY, vol. 276, no. 1, 1 July 2015 (2015-07-01), US, pages 258 - 265, XP055344018
- GRÉLARD FLORENT ET AL: "Precise Cross-Section Estimation on Tubular Organs", 26 August 2015, NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 277 - 288, ISSN: 0302-9743, XP047318506
- GRÉLARD FLORENT ET AL: "Centerlines of Tubular Volumes Based on Orthogonal Plane Estimation", 9 April 2016, NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 427 - 438, ISSN: 0302-9743, XP047340058
- CORNEA N D ET AL: "Curve-Skeleton Properties, Applications, and Algorithms", IEEE TRANSACTIONS ON VISUALIZATION AND COMPUTER GRAPHICS, IEEE SERVICE CENTER, LOS ALAMITOS, CA, US, vol. 13, no. 3, 1 May 2007 (2007-05-01), pages 530 - 548, XP011191353
- "Volume 5: Methods in Cardiovascular and Brain Systems", vol. 5, 1 January 2005, WORLD SCIENTIFIC PUBLISHING CO. PTE. LTD., ISBN: 978-9-81-270104-6, article TOBIAS BOSKAMP ET AL: "GEOMETRICAL AND STRUCTURAL ANALYSIS OF VESSEL SYSTEMS IN 3D MEDICAL IMAGE DATASETS", pages: 1 - 60, XP055104761
- JUNICHIRO TORIWAKI ET AL: "Chapter 1: Introduction", 1 January 2009, FUNDAMENTALS OF THREE-DIMENSIONAL DIGITAL IMAGE PROCESSING, SPRINGER, UK, PAGE(S) 1 - 19, ISBN: 978-1-84800-172-5, XP009500356

## Description

### DOMAINE

Le domaine de l'invention concerne les procédés de traitement d'images de l'arbre bronchique du poumon. En particulier, le domaine de l'invention se rapporte aux procédés de caractérisation géométrique d'une image tridimensionnelle de l'arbre bronchique pour extraire des caractéristiques intrinsèques d'une coupe déterminée d'au moins une bronche. Enfin, le domaine de l'invention se rapporte aux procédés de traitements d'images obtenues à partir d'un système d'imagerie par IRM.

### ETAT DE L'ART

Actuellement, il existe différentes techniques d'imagerie permettant d'acquérir des images du poumon et plus particulièrement de l'arbre bronchique. Un premier intérêt de l'obtention de telles images, est qu'elle permet l'exploration de certaines maladies telles que : l'asthme, la Broncho-Pneumopathie Chronique Obstructive (BPCO), le cancer du poumon, la mucoviscidose, l'apnée du sommeil et les maladies pulmonaires professionnelles. En outre, un autre intérêt est qu'elle permet de modéliser son fonctionnement et de disposer d'images à des fins de recherches scientifiques. En outre, l'étude de la géométrie des bronches, de leurs structures 3D ainsi que leurs caractéristiques dans un plan de coupe permet de les caractériser et de les classifier.

Jusqu'à aujourd'hui, les techniques d'imagerie utilisées sont :
▪ la « Radiographie Thoracique », connue sous l'acronyme « RT » ou ;
▪ la TomoDensitoMétrie, désignée par l'acronyme « TDM » ou « CTscan » en anglais.

Malgré la bonne qualité des images qu'elles peuvent fournir, ces deux techniques présentent l'inconvénient d'être des modalités d'imagerie irradiantes ce qui limite leurs utilisations répétées et notamment dans le cadre du suivi thérapeutique de pathologies chroniques. De plus, seules les données morphométriques sont accessibles en TDM ou en RT. Les informations structurales tissulaires, telle que la différence entre inflammation et fibrose par exemple, sont inaccessibles par ces techniques d'imagerie.

En outre, du fait de l'irradiation causée par ces techniques leurs usages aux fins d'études des caractéristiques des bronches notamment pour établir des modèles cartographiques de l'arbre bronchique ou pour en extraire des données de référence pour des études scientifiques sont limités. En particulier, lorsque des études longitudinales, c'est-à-dire réalisées dans le temps, sont réalisées avec des répétitions de prises d'images notamment chez des sujets jeunes, des enfants ou des adolescents, ces dernières peuvent être alors fortement limitées.

Le document US8233964B2 récite une approche d'analyse des voies aériennes utilisant une image thoracique 3D MDCT. Kiraly, A. P. et al. , "Three-dimensional human airway segmentation methods for clinical virtual bronchoscopy", Academic Radiology, Elsevier, Amsterdam, NL, vol. 9, no. 10, 01.09.2002, pages 1153-1168, divulgue une approche pour l'imagerie par résonance magnétique pulmonaire utilisant des séquences PETRA.

### RESUME DE L'INVENTION

L'invention permet de résoudre les inconvénients précités.

Un objet de l'invention concerne un procédé de caractérisation géométrique à partir d'au moins une première image tridimensionnelle des voies aériennes par IRM pour la caractérisation géométrique d'au moins une bronche d'un arbre bronchique, ledit procédé comprenant :
▪ une acquisition d'au moins une première image IRM d'un poumon, une séquence IRM étant synchronisée sur une fréquence de respiration d'un patient pour acquérir ladite image ;
▪ un filtrage de la première image afin d'augmenter le rapport signal à bruit ;
▪ une segmentation d'une partie de l'image filtrée afin de générer une image segmentée tridimensionnelle comprenant les contours de l'arbre bronchique et sa partie volumétrique intérieure ;
▪ une estimation d'au moins un plan de coupe d'une bronche, chaque plan de coupe étant orthogonal localement à ladite bronche ;
▪ Une génération d'au moins une image de coupe, chaque image de coupe comportant une coupe d'une bronche ;
▪ Une estimation pour chaque image de coupe :
   ∘ d'une aire comprise à l'intérieure de la paroi bronchique de l'image de coupe et/ou ;
   ∘ d'une épaisseur de paroi bronchique de l'image de coupe.

Un avantage est de bénéficier d'une image IRM ne nécessitant nécessairement l'introduction dans le corps d'un patient d'un produit de contraste. Un autre avantage est l'obtention d'une bonne résolution des images obtenues grâce à la segmentation combinée à l'étape de filtrage. Enfin, la synchronisation de la prise d'image avec la fréquence de respiration permet l'acquisition sur des périodes permettant l'obtention d'une image exploitable de bonne résolution.

Selon un mode de réalisation, le procédé comprend une squelettisation de l'image segmentée pour générer un squelette comportant un ensemble de branches, chaque branche étant associée à une bronche.

Un avantage de cette étape est de permettre de construire un modèle des bronches facilitant l'estimation des plans de coupe. Les calculs des plans de coupe nécessitent moins de ressource mémoire et de

Selon un mode de réalisation, la séquence d'acquisition IRM est définie pour des temps d'échos ultra court, par une acquisition 3D isotrope de l'image et une double acquisition dans l'espace des fréquences des informations comprises dans les échos reçus combinant :
▪ une acquisition d'une image définie radialement dans une région définissant la périphérie d'une zone d'intérêt ;
▪ une acquisition d'une image cartésienne définie point par point dans la zone d'intérêt.

Un avantage est d'optimiser le nombre de calculs et les temps d'acquisition notamment pour répéter l'acquisition d'image tridimensionnelle sur des périodes plus longue.

Selon un mode de réalisation, le filtrage de la première image est réalisé à partir d'un filtre médian et/ou un filtre anisotrope de manière à obtenir une image filtrée.

Un avantage est d'éliminer le bruit de l'image acquise afin de limiter les erreurs notamment lors de l'étape de segmentation.

Selon un mode de réalisation, le filtrage comprend l'application d'un filtre combinant des informations colorimétriques et des informations géométriques de la première image à partir d'au moins un estimateur discret de manière à obtenir une image filtrée.

Un avantage est d'éliminer le bruit de l'image acquise afin de limiter les erreurs notamment lors de l'étape de segmentation.

Selon un mode de réalisation, la segmentation d'une partie de l'image filtrée comprend une mise en œuvre d'un procédé de reconnaissance de formes à partir d'une technique de morphologie mathématique afin de dissocier les formes tubulaires du reste de l'image filtrée. Cette technique peut être mise en œuvre à l'aide d'un ou d'une combinaison d'opérateurs de morphologie mathématique.

Un avantage de l'utilisation d'une telle technique est de permettre une meilleure reconnaissance des formes tubulaires et donc une meilleure segmentation des bronches.

Selon un mode de réalisation, la segmentation de toute ou une partie de l'image filtrée comprend :
▪ une sélection d'un ou plusieurs voxels, appelée graine, et la définition d'un seuil de tolérance d'un critère de similitude d'une grandeur caractéristique de voxels;
▪ une propagation automatique d'une zone de voxels comprise dans la gamme de valeurs de la tolérance prédéfinie jusqu'à rencontrer au moins une frontière définie par un ensemble de voxels dont la grandeur caractéristique ne respecte pas le critère de similitude ;
▪ une extraction d'une zone étendue de voxels pour générer une image segmentée.

Un avantage de ces étapes et de réaliser de manière automatique l'étape de segmentation à partir de la définition d'une graine de l'image. Un avantage est également de permettre une configuration des seuils de tolérances en fonction de l'image acquise, de l'organe du patient et donc des caractéristiques propres de ses organes ainsi que des conditions d'acquisition ou du logiciel utilisé de traitement d'images. Enfin, une telle technique permet avantageusement de prendre en compte la présence ou non d'un agent de contraste modifiant la colorimétrie de l'image acquise.

Selon un mode de réalisation, les étapes suivantes :
▪ la sélection d'un ou plusieurs voxels, et ;
▪ la propagation automatique d'une zone de voxels,
sont effectuées une pluralité de fois sur une pluralité de zones de l'image filtrée jusqu'à l'extraction d'une zone étendue de voxels pour générer une image segmentée.

Un avantage de segmenter l'image par parties en considérant des variations de nuances de l'image. Ainsi, en considérant des parties de l'image, les seuils de tolérance prédéfinis des pixels ou des voxels peuvent être définis plus finement.

Selon un mode de réalisation, la segmentation comprend un rognage d'une zone d'intérêt de l'image filtrée, la zone d'intérêt comprenant l'arbre bronchique en 3D.

Un avantage est de focaliser ou zoomer les parties utiles à traiter de l'image pour limiter les temps de calculs ainsi que nombre d'opérations de traitement d'image.

Selon un mode de réalisation, la squelettisation de l'image segmentée comprend :
▪ une construction d'un diagramme de Voronoï à partir de l'image tridimensionnelle segmentée et définissant une pluralité de cellules de Voronoï à partir d'un échantillon de points de l'image segmentée;
▪ une détermination de la matrice de covariance des cellules de Voronoï ;
▪ une génération d'un ensemble de branches obtenues à partir de la matrice de covariance définissant un squelette.

Un avantage de cette squelettisation est qu'elle permet de limiter le nombre de calculs tout en définissant des coupes normales à la paroi tubulaire de chaque bronche traitée.

Selon un mode de réalisation, la squelettisation comprend une opération d'amincissement homotopique de l'image segmentée.

Un avantage de cette technique est de permettre d'obtenir le plan normal directement à partir des segments/ courbes obtenus par l'opération d'amincissement homotopique.

Selon un mode de réalisation, l'estimation d'un plan de coupe d'une branche est réalisée localement en un point sélectionné du squelette par:
▪ Une sélection des cellules de Voronoï entourant la cellule courant du point sélectionné :
   ▪ Une mesure des valeurs propres de chaque vecteur propre défini entre le point sélectionné et un point d'une cellule voisine ;
   ▪ Une sélection des deux plus grandes valeurs de vecteurs propres orthogonaux ;
   ▪ Une génération d'un plan de coupe orienté perpendiculairement à l'axe de la branche localement selon la direction d'un des deux vecteurs propres.

Un avantage de ce mode de réalisation est d'utiliser la modélisation utilisée pour générer le squelette à partir des cellules de Voronoï pour en même temps générer les plans de coupes. Ainsi cette modélisation permet d'obtenir deux résultats qui peuvent indépendamment être utilisé selon l'application de l'invention.

Selon un mode de réalisation, l'estimation d'un plan de coupe d'une bronche est réalisée localement à partir de l'image tridimensionnelle segmentée, l'estimation d'un plan de coupe comprenant une définition d'un ensemble de cellules de Voronoï en des points dudit volume segmenté, un estimateur discret appliqué aux paramètres des cellules de Voronoï générant un plan de coupe localement orthogonal audit volume.

Un avantage de cette solution est de générer automatiquement les plans de coupe à partir de l'image segmentée sans réaliser l'étape de squelettisation.

Un autre objet de l'invention concerne un système de segmentation tridimensionnelle des voies aériennes du poumon. Le système de segmentation comprend un système d'imagerie IRM et un dispositif de synchronisation respiratoire permettant de synchroniser une séquence d'acquisition du système d'imagerie IRM avec la fréquence de respiration d'un patient, un calculateur et une mémoire permettant mettre en œuvre les étapes du procédé de l'invention.

Un avantage d'un tel système est de permettre de réaliser des images d'un poumon sans l'administration d'un agent de constate par un patient.

### BREVE DESCRIPTION DES FIGURES

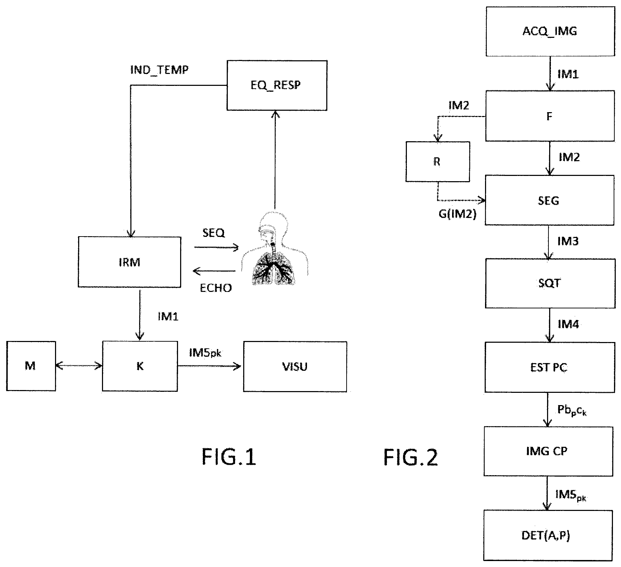

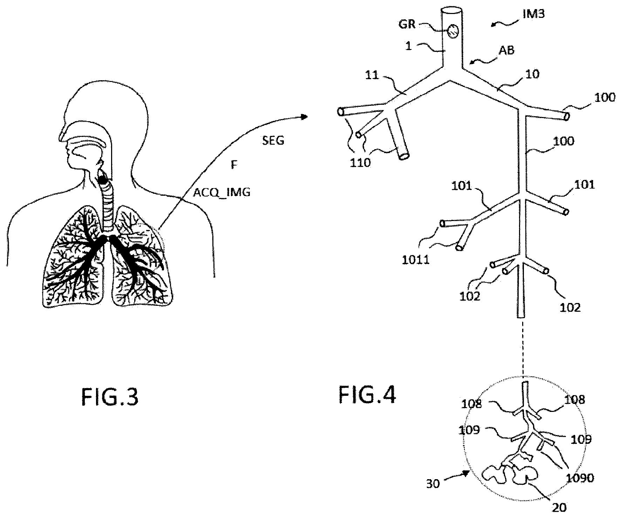

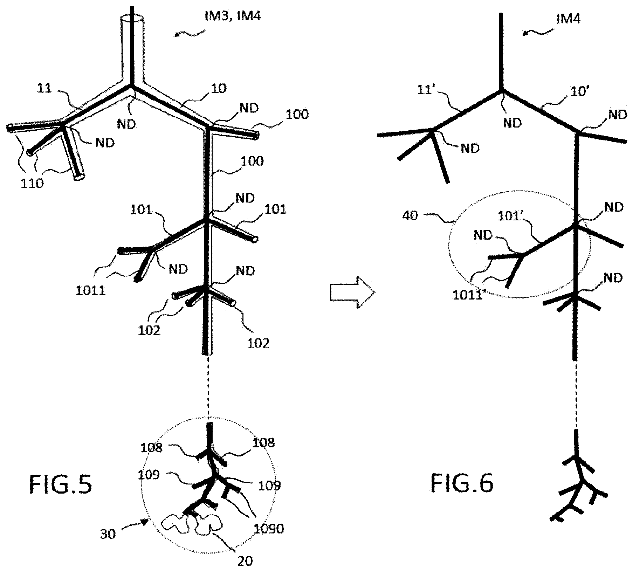

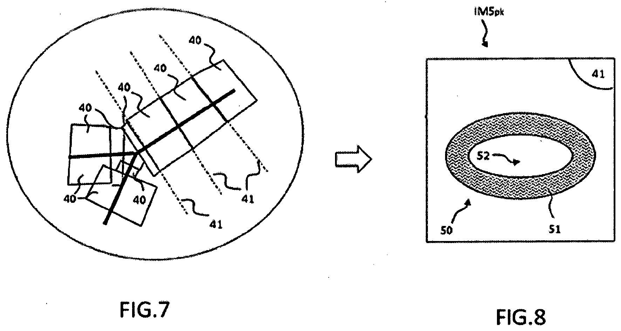

D'autres caractéristiques et avantages de l'invention ressortiront à la lecture de la description détaillée qui suit, en référence aux figures annexées, qui illustrent :
▪ figure 1 : une représentation schématique du système de l'invention permettant notamment de synchroniser l'acquisition des images IRM sur les mouvements de respiration d'un individu ;
▪ figure 2 : un mode de réalisation du procédé de l'invention illustrant ses principales étapes;
▪ figure 3 : une représentation schématique des arbres bronchiques des poumons d'un homme ;
▪ figure 4 : un mode de réalisation d'une étape de segmentation d'une portion d'un arbre bronchique obtenue à partir d'une image 3D acquise par IRM d'une zone d'un poumon ;
▪ figures 5 et 6 : un exemple de représentation d'une étape de squelettisation de l'image segmentée par le procédé de l'invention ;
▪ figure 7 : un exemple de détermination d'un ensemble de plans de coupes du squelette de l'arbre bronchique obtenu par le procédé de l'invention ;
▪ figure 8 : un plan de coupe d'une bronche obtenu par le procédé de l'invention.

### DESCRIPTION

### Acquisition d'images IRM

Le procédé de l'invention comprend une étape d'acquisition d'une image par un système d'imagerie IRM. On entend par une IRM soit le système d'imagerie par IRM soit l'image acquise par un tel équipement. On rappelle qu'une IRM est un système d'imagerie par résonance magnétique. Un tel équipement est connu de l'homme du métier et peut être mis en œuvre par un praticien connaissant un tel équipement.

L'invention concerne les séquences d'acquisition d'images tridimensionnelles permettant d'obtenir une image 3D comportant une pluralité de voxels.

Selon un mode de réalisation de l'invention, une séquence d'acquisition d'au moins une image IRM est définie pour permettre une synchronisation de ladite acquisition avec les mouvements respiratoires d'un patient. Une telle synchronisation permet de prendre en compte les mouvements d'un poumon d'un patient et d'obtenir une bonne résolution d'image.

La séquence d'IRM comprend l'acquisition d'une série d'images. Selon un mode de réalisation, la séquence d'IRM correspond à un procédé d'acquisition de l'image en IRM, qui correspond par exemple au mode 3D+t. A partir de cette séquence, une série d'images 3D peuvent donc être extraites, à partir des différents temps extraits de la synchronisation respiratoire décrite ci-après et mentionnée sur la Figure 1.

Selon un cas d'exemple, la première image IM1 correspond donc à un arbre bronchique 3D extrait à un moment t donné, qui peut ensuite être propagé à l'ensemble des autres éléments 3D de la série.

Pour cela, une première caractéristique d'une telle séquence est qu'elle émet des impulsions dont le temps d'écho, appelé « TE » est dit « ultra court ». Ces impulsions et leurs échos sont nommés UTE, désignant « Ultra Short TE ».

La durée d'une UTE d'une séquence de l'invention peut être comprise entre quelques microsecondes, donc à partir de 1µs jusqu'à quelques microsecondes, c'est-à-dire autour de 10µs.

Une seconde caractéristique de la séquence d'acquisition d'une image IRM est l'acquisition d'une image 3D isotrope. Différentes techniques connues de l'homme de l'art permettent d'obtenir une telle image au moyen d'une IRM. Parmi les techniques connues, citons les suivantes :
▪ Séquence TRUFISP à 5T de Siemens ;
▪ Séquence t BFFE WATSE à 3T de Philips ;
▪ Séquence GE.

Une troisième caractéristique de la séquence d'acquisition est la combinaison de deux modes d'acquisition dans l'espace des fréquences, dits « espace de Fourier ». Un premier mode permet l'acquisition d'une image radiale sur une portion périphérique de la région de l'image acquise. Un second mode permet l'acquisition d'une image cartésienne, c'est-à-dire dire « point-par-point » dans la zone d'intérêt.

Une telle acquisition combinant une image radiale et une image cartésienne permet un gain de traitement et d'encodage des données dans des temps très courts. Ce gain permet notamment d'utiliser les séquences UTE qui nécessitent un traitement d'un grand volume de données dans des périodes très courtes.

Il existe une séquence d'acquisition IRM connue de l'homme de l'art et dénommée PETRA dont l'acronyme désigne « Pointwise Encoding Time reduction with Radial Acquisition » qui combine un TE ultra-court et remplissage de l'espace de Fourier à la fois radial et cartésien. Une telle séquence permet d'imager le poumon avec une résolution spatiale sub-millimétrique tout en conservant du signal et du contraste au niveau du parenchyme pulmonaire.

Les images sont acquises pendant des durées allant de quelques minutes à plusieurs dizaines de minutes. A titre d'exemple, une acquisition d'une durée d'environ 10 minutes en respiration libre avec une synchronisation respiratoire permet d'obtenir une bonne résolution de l'image.

Un autre avantage de l'utilisation de l'acquisition d'une image IRM avec une séquence précédemment définie est que le procédé de l'invention peut s'affranchir de l'usage d'un produit de contraste. En conséquence, un patient n'est pas contraint de se voir injecter un produit de contraste avant la prise d'images. En outre, l'injection d'un produit de contraste peut avoir des effets délétères (allergies, chocs, extravasation, fibrose néphrogénique, accumulation dans les noyaux gris centraux, etc.) sur la santé d'un patient.

Enfin, une conséquence négative de l'usage d'un produit de contraste est que l'image doit être prise dans une fenêtre temporelle contrainte imposant au patient une modalité d'imagerie particulière. L'invention permet de résoudre cet inconvénient.

Enfin, un autre avantage de l'utilisation d'une acquisition IRM est que cette technique est non irradiante. En effet, le principe physique est de faire résonner les atomes d'hydrogène pour obtenir des images fonctionnelles, anatomiques, métaboliques. En conséquence, il n'y a pas d'irradiation des régions imagées.

### Synchronisation respiratoire

Différents équipements et techniques peuvent être utilisés pour synchroniser la séquence d'acquisition de l'IRM avec la respiration d'un patient. Un avantage de cette synchronisation est de permettre d'asservir les séquences d'acquisition de l'IRM sur les mouvements respiratoires de manière à stabiliser la prise d'image, acquérir l'image dans un repère statique dans lequel le poumon retrouve sensiblement une même position, s'affranchir des effets parasites non réguliers de contractions et décontractions du poumon.

Pour cela un premier dispositif de synchronisation comportant un ballon respiratoire peut être employé. Un tel dispositif comporte une ceinture qui est destinée à être attachée sur le thorax ou l'abdomen d'un patient. Le ballon se contracte et se décontracte selon la respiration. Un indicateur lié à l'état de contraction est régulièrement généré par le premier dispositif de synchronisation pour être transmis à une interface de l'IRM. L'IRM intègre une donnée temporelle issue de cet indicateur de contraction et de décontraction du poumon de sorte à marquer temporellement ou horodater des instants de tirs de la séquence d'acquisition.

Selon un autre mode de réalisation, un second dispositif de synchronisation comprend un système d'imagerie du diaphragme de manière à générer un indicateur de position, de mouvement ou d'ouverture du diaphragme. Selon un exemple de réalisation, l'image du diaphragme peut être générée en 2D. Cet indicateur permet de générer des marqueurs temporels qui asservissent les acquisitions d'images IRM. Le second système d'imagerie peut être, par exemple, un navigateur permettant de réaliser une image en profondeur des mouvements du diaphragme.

### Schéma général

La figure 1 représente un schéma d'un couplage d'un équipement EQ_RESP prélevant un indicateur IND_TEMP lié à la respiration d'un patient de manière à asservir une séquence d'acquisition d'une image IRM. Le dispositif de synchronisation permet de générer un indicateur temporel IND_TEMP pour asservir la séquence d'acquisition de l'IRM.

Le système d'imagerie IRM permet de générer au moins une impulsion selon la séquence d'acquisition et d'en capter les échos ECHO. L'impulsion de la séquence est notée SEQ sur la figure 1 et l'image acquise en 3D est notée IM1 sur la figure 1. Plus précisément, l'image IM1 est reconstruite à partir d'un relevé fréquentiel des échos du signal émis.

Une telle image IM1 est traitée par le procédé de l'invention grâce au moins à un calculateur K et une mémoire M. Les résultats IM5ₚₖ du traitement par le procédé de l'invention de l'image acquise par l'IRM peuvent être affichés sur un écran noté VISU. L'indice p désigne la bronche bₚ sélectionnée et l'indice k désigne un plan de coupe pₖ sélectionné de la bronche sélectionnée bₚ.

Ces résultats peuvent se présenter sous forme d'images de coupe de bronches, c'est à dire une image 2D, ou sous forme de valeurs caractéristiques de la bronche dans un plan de coupe, telles que son aire intérieure ou encore l'épaisseur moyenne de la paroi, etc.

Le procédé de l'invention comprend une pluralité d'étapes qui lorsqu'elles sont combinées et exécutées permettent de caractériser un ensemble choisi de bronches de l'arbre bronchique du poumon. La figure 2 représente un exemple de réalisation du procédé comportant un ensemble d'étapes aboutissant à la génération des valeurs caractéristiques d'une coupe d'une bronche et/ou d'images 2D de coupe de bronches.

### Acquisition d'image IRM

La première étape du procédé, précédemment décrite, comprend l'acquisition d'une image tridimensionnelle obtenue grâce à une séquence IRM donnée. Cette étape est notée ACQ_IMG.

La figure 3 représente les poumons d'un homme comprenant chacun un arbre bronchique. L'image acquise par l'IRM n'est pas représentée mais l'image segmentée IM3 est représentée à la figure 4 après que les étrapes d'acquisition ACQ_IMG, de filtrage F et de segmentation SEG soient réalisées.

Un avantage de l'acquisition tridimensionnelle à partir d'une IRM est que l'acquisition est réalisée directement dans le plan de Fourier donc en 3D. Il s'agit d'un remplissage sphérique par exemple avec les modalités PETRA ou 3D-UTE ou d'un remplissage cylindrique, radial ou radial et cylindrique ou spiralé, etc.

Un avantage d'acquérir directement une image 3D, au lieu d'acquérir une image en couches 2D puis reconstruite par empilements de couches pour générer une image 3D, est de permettre une répétition du centre de l'espace de Fourier. En effet, ce centre contient le contraste de l'image. En empilant des coupes 2D, seule une partie des coupes passent par le centre, et il est donc connu que le signal IRM est insuffisant à l'obtention d'une imagerie des voies aériennes intra-pulmonaires. Avec un mode 3D, des tirs radiaires ou point par point ou spiralés ou torsadés multiples, à partir du centre de l'espace de Fourier, est possible. Ce mode d'acquisition 3D, coupé à des temps d'écho ultracourts, permet donc de concrétiser l'obtention d'une imagerie des voies aériennes intra-pulmonaires.

Optionnellement, avant l'exécution d'une étape de filtrage, une étape de fenêtrage et de centrage peuvent être réalisée sur l'image acquise IM1. Des représentations 2D axiale, coronale et sagittale peuvent être extraites de l'image 3D.

### Etape de filtrage, F

Lorsque l'image est acquise par le système d'imagerie IRM, une première étape de filtrage F est réalisée. Un objectif de cette première étape de filtrage est d'augmenter le rapport signal à bruit. Cette étape permet de surmonter une difficulté de l'usage de l'IRM dans l'imagerie des régions pulmonaires. En effet, l'IRM ne s'est pas encore imposée dans l'exploration pulmonaire en raison de la faible quantité de protons présente dans les poumons. Cette quantité de protons est par exemple dix fois inférieure à celle des autres organes. En conséquence, les images obtenues ont un trop faible rapport signal sur bruit pour être utilisables directement.

Avantageusement, le procédé de l'invention permet d'effectuer une première étape de filtrage visant à améliorer la qualité de l'image acquise à traiter.

Une des difficultés surmontées par le procédé de l'invention est d'appliquer un filtrage tout en conservant les contours des structures fines définies par les bronches.

A cette fin, le filtrage peut comprendre un filtrage médian de l'image acquise. Un filtrage médian peut être, par exemple, un algorithme appliqué à l'image acquise basé sur l'analyse des valeurs caractéristiques de chaque voxel en considérant la valeur médiane des voxels voisins du voxel considéré.

Selon un mode de réalisation un filtre médian anisotrope peut être alternativement appliqué à l'image acquise. Ce filtrage anisotrope permet notamment d'éliminer les effets de crénelage et réduit le flou.

Selon un autre mode de réalisation, qui peut être combiné à l'un des filtrages précédents, c'est-à-dire un filtrage médian et/ou anisotrope, l'étape de filtrage comprend l'application d'un filtre de reconnaissance de formes tubulaires. Un filtre de reconnaissance de formes tubulaires peut être réalisé à partir d'un algorithme mathématique permettant de reconnaitre les formes tubulaires que forment les bronches. Un tel filtre peut être, par exemple, un filtre morphologique. Un filtre morphologique se caractérise notamment par une transformation croissante et idempotente sur un treillis de points.

Alternativement, le filtre de reconnaissance de formes tubulaires peut être réalisé à partir d'un ou plusieurs estimateurs discrets permettant de traiter les informations colorimétriques et géométriques de l'image acquise.

On peut aussi combiner ces deux approches afin de réaliser un filtre de reconnaissance de formes de tubulaires.

L'image filtrée obtenue, quels que soient les filtres appliqués dans l'étape de filtrage selon les différentes variantes de l'invention, est notée IM2.

Des filtres peuvent être appliqués successivement ou conjointement selon les opérations sur les matrices des valeurs caractéristiques des voxels acquis. Le résultat des opérations de filtrage produit une image filtrée IM2.

Selon un mode de réalisation, le filtrage est configuré pour augmenter le signal sur bruit et pour palier et des artéfacts spécifiques de l'IRM. Notamment, le filtrage permet de palier un aspect pointillé de l'image du fait d'un effet nommé « streaks », d'harmoniser le signal sur l'image 3D du fait des artéfacts de renforcement liés aux antennes, ou au contraire le manque de signal lié à l'éloignement des antennes, et au repliement 3D.

Le filtrage vise également à rendre les contours plus nets à l'aide de rehaussement de contours.

### Etape de segmentation

Le procédé de l'invention comprend une troisième étape, notée SEG, qui permet de segmenter l'image filtrée IM2. L'image obtenue à l'issue de l'étape de segmentation est notée IM3. Une segmentation de l'image IM2 vise à produire une image IM3 dans laquelle les délimitations des bronches dans l'espace 3D sont détourées du reste de l'image et l'espace interne des bronches est préservé.

Optionnellement, une étape de rognage R de l'image filtrée IM2 est réalisée avant l'étape de segmentation SEG de manière à isoler une partie de l'image à traiter. La figure 2 représente une telle étape optionnelle.

La segmentation SEG comprend la sélection d'une ou plusieurs graine GR de l'image IM2. La graine GR peut être un voxel ou un ensemble de voxels. La sélection d'un ensemble de voxels permet d'établir, par exemple, une grandeur caractéristique telle que par exemple une moyenne caractéristique ou un écart type caractéristique vis-à-vis d'une valeur moyenne ou médiane. Cette grandeur caractéristique permet, par exemple, de déterminer un seuil de tolérance d'un critère de similitude pour l'analyse de voxels voisins de la graine de départ.

Selon un premier mode de réalisation, la graine GR peut être sélectionnée par un opérateur par la sélection d'un voxel à partir d'une image, par exemple au moyen d'un pointeur. Selon un second mode de réalisation, la graine GR peut être automatiquement sélectionnée soit dans une région prédéterminée de l'arbre bronchique par un algorithme définissant une région d'intérêt pour sélectionner une graine, soit en fonction d'un critère de valeur moyenne d'un niveau de gris de voxels répartis dans une région donnée.

La segmentation SEG comprend la propagation de proche en proche d'une sélection de voxels considérée comme sensiblement « proche » d'un voxel voisin selon un critère de similitude. Le critère de similitude peut être basé sur un critère de luminosité, de contraste, de couleur, de saturation ou de teinte ou encore d'une combinaison de ces critères. Ainsi, l'étape de segmentation SEG permet de définir un volume de l'image à extraire. La propagation de proche en proche s'appuie sur une comparaison d'une valeur d'un critère de similitude d'un voxel avec une valeur de tolérance prédéfinie. Un intérêt d'une telle segmentation SEG est d'extraire la partie de l'image IM3 concernant uniquement les bronches du reste de l'image.

Un avantage de cette étape de segmentation est de permettre de retirer toute ou partie de l'image correspondant aux es vaisseaux des bronches de l'image générée. En effet, les vaisseaux ont des propriétés d'imagerie lors de l'acquisition IRM différentes des portions aérées des bronches. Il est alors possible de visualiser dans le plan de coupe généré par le procédé de l'invention les sections des vaisseaux.

Le résultat d'une étape de segmentation SEG est représenté à la figure 4. Une image IM3 illustre différentes bronches extraites de l'image IM2 dont les contours sont détourés. La segmentation de l'arbre bronchique AB ou une partie de cet arbre aboutit à la génération d'une image IM3. L'image segmentée IM3 comprend le contour et le volume de la bronche principale ainsi que l'ensemble des bronches ayant une forme sensiblement tubulaire et leur volume intérieur.

La segmentation peut être engagée de manière automatique par un algorithme de détection de formes générales et du choix d'une graine GR de la trachée, c'est-à-dire d'une partie supérieure de l'arbre bronchique AB dont la section est la plus importante que le reste des bronches. Cette partie de l'arbre bronchique AB permet une bonne propagation de l'opération de segmentation et offre un point de départ de l'opération de segmentation facilitant la comparaison des voxels de proche en proche.

D'une manière alternative, une sélection manuelle d'une graine peut être effectuée par un opérateur.

La figure 4 représente une graine GR dans la trachée, c'est-à-dire la bronche principale de l'arbre bronchique AB.

Selon d'autres modes de réalisation, la graine peut être déterminée dans une autre partie de l'arbre bronchique AB.

Selon une variante de réalisation, la graine GR est définie dans la partie de l'image en dehors des voxels de l'arbre bronchique AB, l'image extraite est alors l'image complémentaire de l'arbre bronchique segmenté. Dans ce cas de figure, l'arbre bronchique AB est obtenu par une opération de soustraction de l'image extraite de l'image totale.

L'image segmentée IM3 de la figure 4 comprend la bronche principale, la trachée, notée 1. Dans l'hypothèse où la graine GR serait déterminée dans la trachée, des bronches secondaires sont 10, 11 sont ensuite segmentées de proche en proche grâce à la propagation du mécanisme de la segmentation. La segmentation se propage de proche en proche de manière à extraire également des bronches de 3eme ordre 110 et 110. L'étape de segmentation se poursuit sur l'une des bronches de 3eme ordre, notée 100, avec la représentation de bronches de 4eme ordre 101, 102 et 108, 109 et ainsi de suite jusqu'à obtenir une segmentation suffisante de l'arbre bronchique AB pour déterminer une caractérisation géométrique de l'arbre bronchique.

Dans certains cas, la segmentation de l'arbre bronchique AB peut se poursuivre jusqu'aux bronches de 5eme ordre : 1011, 1090 et voire dans de rares cas jusqu'aux bronchioles terminales 20 d'un lobule 30 lorsque leurs dimensions sont supérieures à la dimension d'un voxel.

Selon un mode de réalisation de l'invention, la segmentation peut être appliquée uniquement à une partie de l'arbre bronchique AB. Selon un mode de réalisation, la propagation peut être adaptée selon l'ordre des bronches pour arrêter automatiquement la propagation à un ordre de bronches.

On note qu'une étape de segmentation pourrait être aussi bien appliquée sur une image 2D que sur une image 3D comme décrit précédemment. La segmentation d'une image 2D est notamment une opération possible pour extraire la paroi d'une bronche dans un plan de coupe déterminé dans la suite du procédé.

### Etape de squelettisation

Le procédé de l'invention comporte une étape notée SQT représentée aux figures 5 et 6 visant à générer un squelette curvilinéaire à partir de l'image segmentée IM3. Le squelette comprend un ensemble de branches. L'image obtenue à l'issue de l'étape de squelettisation est notée IM4. La figure 5 représente l'image segmentée et le squelette, la figure 6 ne représente que le squelette. Seules quelques branches du squelette sont annotées dont notamment la branche 11' issue de la bronche 11, la branche 10' issue de la bronche 10, la branche 101' issue de la bronche 101' et les branches 1011' issues des bronches 1011.

Lors de l'étape de squelettisation, selon un mode préférentiel, les branches du squelette bronchique sont définies au centre des cylindres définies par les bronches volumétriques de l'image IM3. La figure 5 représente une schématisation qui ne représente pas fidèlement le centrage des branches dans chaque cylindre du fait de la représentation schématique.

Selon cette représentation une bronche entre deux nœuds ND successifs est matérialisée par une branche. Un nœud ND s'entend comme une intersection entre une branche mère et ses branches filles ou encore comme l'intersection de branches de deux ordres de branches successifs, comme par exemple l'intersection entre une branche du 3eme ordre et d'une branche du 4eme ordre.

Alternativement, une variante de réalisation pour obtenir le squelette IM4 peut être obtenue à partir d'un algorithme basé sur une technique d'amincissement homotopique.

Tout autre algorithme de squelettisation curvilinéaire peut être mis en œuvre par l'invention.

### Alternative à l'étape de squelettisation

Selon un mode de réalisation, l'opération de squelettisation SQT n'est pas réalisée. Dans ce dernier cas, les plans coupes sont directement calculés à partir du volume segmenté tridimensionnel IM3. Le volume segmenté tridimensionnel comporte un ensemble de formes tubulaires définissant les bronches modélisées dans l'image IM3.

Dans ce dernier cas, des mesures de covariance sont calculées sur la définition des cellules de Voronoï définies par le volume segmenté, c'est-à-dire l'arbre bronchique obtenu dans l'image IM3. La mesure de covariance comprend le calcul des valeurs et vecteurs propres de la matrice de covariance associée aux cellules.

### Etape d'estimation des plans de coupe avec squelettisation

L'étape d'estimation des plans de coupe EST PC peut être réalisée conjointement à l'opération de squelettisation SQT. Typiquement, cette opération peut résulter naturellement de l'opération de lissage ou de génération de tangentes aux branches du squelette en des points déterminés pour lesquels un plan de coupe est souhaité.

Selon un exemple, trois points par branche peuvent être choisis en les définissants avec une répartition sur ladite branche. Cette sélection de points peut être effectuée manuellement ou automatiquement par application d'un algorithme de détermination de points sur chaque branche. Selon d'autres exemples, une pluralité de points peuvent être définis sur chaque branche avec une répartition prédéterminée sur ladite branche.

Une première technique consiste à estimer les tangentes sur des portions d'intérêts du squelette pour lesquelles au moins un plan de coupe est défini. Les portions d'intérêts peuvent être définies par des points déterminés de la branche. Dans ce cas, deux points distants à certain pourcentage de la longueur de la branche définissent une portion de la branche.

Une seconde technique consiste à appliquer un estimateur sur les cellules de Voronoï définies par les points du squelette. Un tel estimateur permet d'extraire un plan de coupe à partir de la sélection d'une cellule de Voronoï définie par le squelette. Par exemple, l'extraction du plan de coupe peut être réalisée en gardant les deux vecteurs propres de plus grandes valeurs propres de chaque cellule. L'obtention d'une estimation précise du plan de coupe orthogonale à la bronche peut être déduite de ces deux vecteurs propres.

Un autre avantage est de bénéficier d'une fonction de centrage du squelette obtenu de manière à faciliter les opérations successives de générations de plan de coupe EST PC

Ainsi, cette opération d'estimation d'au moins un plan de coupe peut être conjointement menée à l'issue de la squelettisation obtenue à partir des cellules de Voronoï définie lors de l'opération de squelettisation.

La figure 7 représente un exemple de réalisation de la génération d'un ensemble de cellules de Voronoï 40 sur une portion du squelette obtenu par le procédé de l'invention. On comprend que les cellules de Voronoï 40 permettent d'extraire naturellement les plans de coupes 41 à partir des vecteurs propres définis par les contours desdites cellules.

Lors de l'estimation d'un plan de coupe pₖ d'une bronche bₚ à partir d'un squelette généré par le procédé de l'invention, il est possible de moyenner un ensemble de plans de coupes localisés pour réduire les erreurs isolées d'orientation de certains plans de coupes estimés. Dans ce cas, les erreurs d'orientation d'un plan de coupe estimé peuvent plus simplement être détectées en comparant les plans de coupe dans le voisinage du plan coupe estimé.

### Etape d'estimation des plans de coupe sans squelettisation

Une technique alternative consiste à estimer directement à partir de l'image segmentée IM3 une approximation d'un plan de coupe à la bronche de l'image segmentée. Dans ce dernier cas, comme vu précédemment, un ensemble de voxels d'une bronche définit une courbe volumétrique. Les cellules de Voronoï sont alors définies dans le volume segmenté IM3.

Un estimateur discret peut se baser sur les cellules de Voronoï générées par des points de l'image IM3 pour estimer les coupes orthogonales des bronches dans une région d'intérêt. La région d'intérêt peut être déterminée automatiquement ou en sélectionnant un point de l'arbre bronchique pour déterminer un plan de coupe comprenant le point sélectionné.

### Construction de l'image dans un plan de coupe

A partir des plans de coupe, le procédé de l'invention permet d'extraire la partie de l'image 2D comprise dans le plan de coupe interceptant l'image segmentée, cette étape est notée IMG CP. On reconstruit alors l'image dans ce plan de coupe orthogonal de manière à visualiser une coupe d'une bronche 50 permettant d'accéder aux mesures de la paroi 51 d'une bronche et son aire intérieure 52.

Une opération de segmentation de la paroi bronchique à l'aide d'un opérateur de type Laplacien de gaussienne peut être utilisé.

Une technique analogue à la sélection d'une graine par la sélection manuelle ou automatique de pixels de l'image 2D permet de détourer la partie annulaire de la bronche formant la paroi 51. Un tel algorithme peut être similaire à celui de la segmentation 3D précédemment décrit. La propagation d'une zone de l'espace 2D à partir d'une sélection d'une graine permet d'obtenir un contour de la paroi de la bronche dans le plan de coupe et d'en extraire des propriétés géométriques.

De la même manière un critère de similitude est déterminé pour élaborer une règle de propagation de proche en proche à partir de la graine. Le critère de similitude peut être basé sur un critère de couleur, de contraste, de saturation, de teinte ou de luminosité ou une combinaison de ces critères. Un seuil de tolérance permet de propager de proche en proche la zone de sélection des pixels/voxels répondant au critère par comparaison avec une valeur de tolérance prédéfinie. La forme générale peut alors être extraite à partir d'une opération de segmentation 2D.

Un algorithme de reconnaissance de formes peut être conjointement appliqué de manière à optimiser la segmentation de la paroi de la bronche dans l'image 2D du plan de coupe.

Une fois la paroi bronchique segmentée, on peut donc estimer son aire, ainsi que l'aire de la lumière dans la bronche. Il est possible d'obtenir des valeurs moyennes de l'épaisseur de la paroi sur tout ou une partie du plan de coupe. Une estimation de la forme générale de la lumière de la bronche permet également de caractériser la bronche selon si la forme se rapproche d'un cercle, une ellipse ou d'un point.

Le procédé de l'invention permet donc d'obtenir des valeurs caractéristiques de bronches de l'arbre bronchique sans irradier le patient. En outre, compte tenu de la synchronisation possible entre la fréquence respiratoire et la séquence d'acquisition de l'IRM, un niveau de résolution de l'image peut être obtenu de sorte que ce procédé devienne une alternative préférable à d'autres systèmes d'imagerie. Un tel procédé permet d'obtenir une résolution spatiale de l'ordre de 0,7 à 1 mm³.

Enfin, le procédé de l'invention permet de réaliser un compromis entre une résolution d'image à atteindre et un contraste obtenu selon la durée d'acquisition.

## Revendications

1. Procédé de caractérisation géométrique à partir d'au moins une première image tridimensionnelle (IM1) des voies aériennes par IRM pour la caractérisation géométrique d'au moins une bronche d'un arbre bronchique, ledit procédé comprenant :
• une acquisition (ACQ_IMG) directe d'au moins une première image tridimensionnelle (IM1) par IRM d'un poumon à partir d'un remplissage directement 3D de l'espace de Fourier et une séquence d'acquisition IRM de la au moins une première image tridimensionnelle (IM1) par IRM d'un poumon étant synchronisée sur une fréquence de respiration d'un patient;
• un filtrage (F) de la première image tridimensionnelle (IM1) afin d'augmenter le rapport signal à bruit ;
• une segmentation (SEG) d'une partie de l'image filtrée (IM2) afin de générer une image segmentée (IM3) tridimensionnelle comprenant les contours de l'arbre bronchique (AB) et sa partie volumétrique intérieure
• une estimation (EST PC) d'au moins un plan de coupe (pₖ) d'une bronche (bₚ), chaque plan de coupe (pₖ) étant orthogonal localement à ladite bronche ;
• une génération d'au moins une image de coupe (IMG CP), chaque image de coupe (IM5ₚₖ) comportant une coupe d'une bronche (bₚ),
• une estimation pour chaque image de coupe (IM5ₚₖ):
∘ d'une aire (52) comprise à l'intérieure de la paroi bronchique de l'image de coupe (IM5ₚₖ) et/ou ;
∘ d'une épaisseur de paroi bronchique (51) de l'image de coupe (IM5ₚₖ),
• dans lequel ladite séquence d'acquisition IRM de ladite au moins une première image tridimensionnelle (IM1) par IRM est définie pour des temps d'écho ultra-courts et comprend l'acquisition d'une pluralité d'images IRM obtenues par une acquisition 3D isotrope de données d'image dans un espace 3D de Fourier à partir d'un centre de l'espace 3D de Fourier de manière à obtenir une répétition du centre de l'espace 3D de Fourier pendant l'acquisition (ACQ_IMG) directe d'au moins une première image tridimensionnelle (IM1) par IRM d'un poumon.

2. Procédé selon la revendication 1, **caractérisé en ce qu'**il comprend :
• une squelettisation (SQT) de l'image segmentée (IM3) pour générer un squelette (IM4) comportant un ensemble de branches, chaque branche étant associée à une bronche (bₚ).

3. Procédé selon la revendication 2, **caractérisé en ce que** la squelettisation (SQT) de l'image segmentée (IM3) comprend :
• une construction d'un diagramme de Voronoï à partir de l'image tridimensionnelle segmentée (IM3) et définissant une pluralité de cellules de Voronoï à partir d'un échantillon de points de l'image segmentée (IM3) ;
• une détermination de la matrice de covariance des cellules de Voronoï;
• une génération d'un ensemble de branches obtenues à partir de la matrice de covariance définissant un squelette.

4. Procédé selon la revendication 2, **caractérisé en ce que** la squelettisation comprend une opération d'amincissement homotopique de l'image segmentée (IM3).

5. Procédé selon l'une quelconque des revendications 1 à 4, **caractérisé en ce que** la séquence d'acquisition IRM est définie en outre par une double acquisition dans l'espace 5 des fréquences des informations comprises dans les échos reçus combinant :
• une acquisition d'une image définie radialement dans une région définissant la périphérie d'une zone d'intérêt ;
• une acquisition d'une image cartésienne définie point par point dans la zone d'intérêt.

6. Procédé selon l'une quelconque des revendications 1 à 5, **caractérisé en ce que** le filtrage de la première image (IM1) est réalisé à partir d'un filtre médian et/ou un filtre anisotrope de manière à obtenir une image filtrée (IM2).

7. Procédé selon l'une quelconque des revendications 1 à 6, **caractérisé en ce que** le filtrage comprend l'application d'un filtre combinant des informations colorimétriques et des informations géométriques de la première image (IM1) à partir d'au moins un estimateur de manière à obtenir une image filtrée (IM2).

8. Procédé selon l'une quelconque des revendications 1 à 7, **caractérisé en ce que** la segmentation (SEG) d'une partie de l'image filtrée (IM2) comprend une mise en œuvre d'un procédé de reconnaissance de formes à partir d'une technique de morphologie mathématique comprenant une dissociation des formes tubulaires du reste de l'image filtrée (IM2).

9. Procédé selon l'une quelconque des revendications 1 à 8, **caractérisé en ce que** la segmentation (SEG) de toute ou une partie de l'image filtrée (IM2) comprend :
• une sélection d'un ou plusieurs voxels, appelée graine, et la définition d'un seuil de tolérance d'un critère de similitude d'une grandeur caractéristique de voxels ;
• une propagation automatique d'une zone de voxels comprise dans la gamme de valeurs de la tolérance prédéfinie jusqu'à rencontrer au moins une frontière définie par un ensemble de voxels dont la grandeur caractéristique ne respecte pas le critère de similitude ;
• une extraction de ladite zone de voxels pour générer une image segmentée (IM3) ;
le critère de similitude étant choisi parmi la couleur, le contraste, la saturation, la teinte, la luminosité ou une combinaison de ces critères ;
la grandeur caractéristique étant choisie parmi une moyenne ou un écart type vis-à-vis d'une valeur moyenne ou médiane.

10. Procédé selon la revendication 9, **caractérisé en ce que** les étapes suivantes :
• la sélection d'un ou plusieurs voxels, et ;
• la propagation automatique d'une zone de voxels,
sont effectuées une pluralité de fois sur une pluralité de zones de l'image filtrée (IM2) jusqu'à l'extraction de ladite zone de voxels pour générer une image segmentée (IM3).

11. Procédé selon l'une quelconque des revendications 1 à 10, **caractérisé en ce que** la segmentation (SEG) comprend un rognage (R) d'une zone d'intérêt de l'image filtrée (IM2), la zone d'intérêt comprenant l'arbre bronchique en 3D.

12. Procédé selon l'une quelconque des revendications 2 à **11, caractérisé en ce que** l'estimation d'un plan de coupe (EST PC) d'une branche (11', 10', 101') est réalisée localement en un point sélectionné du squelette par :
• une sélection des cellules de Voronoï entourant la cellule courant du point sélectionné ;
• une mesure des valeurs propres de chaque vecteur propre défini entre le point sélectionné et un point d'une cellule voisine ;
• une sélection des deux plus grandes valeurs de vecteurs propres orthogonaux ;
• une génération d'un plan de coupe orienté perpendiculairement à l'axe de la branche localement selon la direction d'un des deux vecteurs propres.

13. Procédé selon la revendication 1, **caractérisé en ce que** l'estimation d'un plan de coupe (EST PC) d'une bronche est réalisée localement à partir de l'image tridimensionnelle segmentée (IM3), l'estimation d'un plan de coupe (EST PC) comprenant une définition d'un ensemble de cellules de Voronoï en des points dudit volume segmenté, un estimateur discret appliqué aux paramètres des cellules de Voronoï générant un plan de coupe localement orthogonal audit volume.

14. Système de segmentation tridimensionnelle des voies aériennes du poumon, **caractérisé en ce qu'**il comprend un système d'imagerie IRM et un dispositif de synchronisation respiratoire permettant de synchroniser une séquence d'acquisition du système d'imagerie IRM avec la fréquence de respiration d'un patient, un calculateur (K) et une mémoire (M) permettant mettre en œuvre les étapes du procédé de l'une quelconque des revendications 1 à 13.

## Patentansprüche

1. Verfahren zur geometrischen Charakterisierung anhand mindestens eines ersten dreidimensionalen Bildes (IM1) der Atemwege mittels MRT zur geometrischen Charakterisierung mindestens einer Bronchie eines Bronchialbaums, wobei das Verfahren umfasst:
• eine direkte (ACQ_IMG) Akquisition mindestens eines ersten dreidimensionalen Bildes (IM1) mittels MRT einer Lunge anhand einer direkten 3D-Füllung des Fourier-Raums und eine MRT-Akquisitionssequenz des mindestens einen ersten dreidimensionalen Bildes (IM1) mittels MRT einer Lunge, die mit der Atemfrequenz eines Patienten synchronisiert ist;
• ein Filtern (F) des ersten dreidimensionalen Bildes (IM1), um das Signal-Rausch-Verhältnis zu erhöhen;
• eine Segmentierung (SEG) eines Teils des gefilterten Bildes (IM2), um ein segmentiertes dreidimensionales Bild (IM3) zu erzeugen, das die Konturen des Bronchialbaums (AB) und seines inneren Volumenteils umfasst;
• eine Schätzung (EST PC) mindestens einer Schnittebene (pₖ) einer Bronchie (bₚ), wobei jede Schnittebene (pₖ) lokal orthogonal zu der Bronchie ist;
• Erzeugung mindestens eines Schnittbildes (IMG CP), wobei jedes Schnittbild (IM5ₚₖ) einen Schnitt einer Bronchie (bₚ) umfasst;
• eine Schätzung für jedes Schnittbild (IM5ₚₖ):
∘ einer Fläche (52) innerhalb der Bronchialwand des Schnittbildes (IM5ₚₖ) und/oder;
∘ einer Bronchialwanddicke (51) des Schnittbildes (IM5ₚₖ),
• wobei die MRT-Akquisitionssequenz des mindestens einen ersten dreidimensionalen Bildes (IM1) durch MRT für ultrakurze Echozeiten definiert ist und die Akquisition einer Vielzahl von MRT-Bildern umfasst, die durch eine isotrope 3D-Akquisition von Bilddaten in einem 3D-Fourier-Raum von einem Zentrum des 3D-Fourier-Raums ausgehend erhalten werden, um eine Wiederholung des Zentrums des 3D-Fourier-Raums während der direkten (ACQ_IMG) Akquisition mindestens eines ersten dreidimensionalen Bildes (IM1) mittels MRT einer Lunge zu erzielen.

2. Verfahren nach Anspruch 1, **dadurch gekennzeichnet, dass** es umfasst:
• eine Skelettierung (SQT) des segmentierten Bildes (IM3), um ein Skelett (IM4) zu erzeugen, das eine Reihe von Verzweigungen umfasst, wobei jede Verzweigung einer Bronchie (bₚ) zugeordnet ist.

3. Verfahren nach Anspruch 2, **dadurch gekennzeichnet, dass** die Skelettierung (SQT) des segmentierten Bildes (IM3) umfasst:
• eine Konstruktion eines Voronoi-Diagramms anhand des segmentierten dreidimensionalen Bildes (IM3), das eine Vielzahl von Voronoi-Zellen aus einem Muster von Punkten des segmentierten Bildes (IM3) definiert;
• eine Bestimmung der Kovarianzmatrix der Voronoi-Zellen;
• ein Erzeugen einer Menge von Verzweigungen, die aus der Kovarianzmatrix erhalten werden und ein Skelett definieren.

4. Verfahren nach Anspruch 2, **dadurch gekennzeichnet, dass** die Skelettierung einen homotopischen Verjüngungsvorgang des segmentierten Bildes (IM3) umfasst.

5. Verfahren nach einem der Ansprüche 1 bis 4, **dadurch gekennzeichnet, dass** die MRT-Akquisitionssequenz ferner durch eine doppelte Akquisition im Raum 5 der Frequenzen der in den empfangenen Echos enthaltenen Informationen definiert ist, wobei kombiniert wird:
• eine Akquisition eines radial definierten Bildes in einem Bereich, der den Umfang einer relevanten Zone definiert;
• eine Akquisition eines kartesischen Bildes, das Punkt für Punkt in dem relevanten Bereich definiert ist.

6. Verfahren nach einem der Ansprüche 1 bis 5, **dadurch gekennzeichnet, dass** das Filtern des ersten Bildes (IM1) anhand eines Medianfilters und/oder eines anisotropen Filters durchgeführt wird, um ein gefiltertes Bild (IM2) zu erhalten.

7. Verfahren nach einem der Ansprüche 1 bis 6, **dadurch gekennzeichnet, dass** das Filtern die Anwendung eines Filters umfasst, das kolorimetrische Informationen und geometrische Informationen des ersten Bildes (IM1) aus mindestens einer Schätzfunktion kombiniert, um ein gefiltertes Bild (IM2) zu erhalten.

8. Verfahren nach einem der Ansprüche 1 bis 7, **dadurch gekennzeichnet, dass** die Segmentierung (SEG) eines Teils des gefilterten Bildes (IM2) die Anwendung eines Formenerkennungsverfahrens auf der Grundlage einer mathematisch-morphologischen Technik umfasst, die eine Trennung der röhrenförmigen Formen vom Rest des gefilterten Bildes (IM2) beinhaltet.

9. Verfahren nach einem der Ansprüche 1 bis 8, **dadurch gekennzeichnet, dass** die Segmentierung (SEG) des gesamten oder eines Teils des gefilterten Bildes (IM2) umfasst:
• eine Auswahl eines oder mehrerer Voxel, die als Kern bezeichnet werden, und die Festlegung eines Toleranzschwellenwerts für ein Ähnlichkeitskriterium einer charakteristischen Größe von Voxeln;
• eine automatische Ausbreitung eines Voxelbereichs, der im Wertebereich der vordefinierten Toleranz liegt, bis mindestens eine Grenze erreicht ist, die durch eine Gruppe von Voxeln definiert ist, deren charakteristische Größe das Ähnlichkeitskriterium nicht erfüllt;
• eine Extraktion dieses Voxelbereichs, um ein segmentiertes Bild (IM3) zu erzeugen;
wobei das Ähnlichkeitskriterium aus Farbe, Kontrast, Sättigung, Farbton, Helligkeit oder einer Kombination dieser Kriterien ausgewählt wird;
wobei die charakteristische Größe aus einem Mittelwert oder einer Standardabweichung in Bezug auf einen Mittelwert oder Medianwert ausgewählt wird.

10. Verfahren nach Anspruch 9, **dadurch gekennzeichnet, dass** die folgenden Schritte:
• Auswählen eines oder mehrerer Voxel und;
• die automatische Ausbreitung eines Voxelbereichs
mehrfach an mehreren Bereichen des gefilterten Bildes (IM2) durchgeführt werden, bis der Voxelbereich extrahiert ist, um ein segmentiertes Bild (IM3) zu erzeugen.

11. Verfahren nach einem der Ansprüche 1 bis 10, **dadurch gekennzeichnet, dass** die Segmentierung (SEG) ein Zuschneiden (R) eines relevanten Bereichs des gefilterten Bildes (IM2) umfasst, wobei der relevante Bereich den Bronchialbaum in 3D umfasst.

12. Verfahren nach einem der Ansprüche 2 bis 11, **dadurch gekennzeichnet, dass** die Schätzung einer Schnittebene (EST PC) einer Verzweigung (11', 10', 101') lokal an einem ausgewählten Punkt des Skeletts durchgeführt wird durch:
• Auswahl der Voronoi-Zellen, die die aktuelle Zelle des ausgewählten Punktes umgeben;
• Messen der Eigenwerte jedes Eigenvektors, der zwischen dem ausgewählten Punkt und einem Punkt einer benachbarten Zelle definiert ist;
• Auswahl der beiden größten Werte orthogonaler Eigenvektoren;
• Erzeugen einer Schnittebene, die örtlich senkrecht zur Achse der Verzweigung in Richtung eines der beiden Eigenvektoren ausgerichtet ist.

13. Verfahren nach Anspruch 1, **dadurch gekennzeichnet, dass** die Schätzung einer Schnittebene (EST PC) einer Bronchie lokal aus dem segmentierten dreidimensionalen Bild (IM3) durchgeführt wird, wobei die Schätzung einer Schnittebene (EST PC) eine Definition einer Menge von Voronoi-Zellen an Punkten des segmentierten Volumens umfasst, wobei eine diskrete Schätzfunktion, die auf die Parameter der Voronoi-Zellen angewendet wird, eine Schnittebene erzeugt, die örtlich orthogonal zu dem Volumen ist.

14. System zur dreidimensionalen Segmentierung der Atemwege der Lunge, **dadurch gekennzeichnet, dass** es ein MRT-Bildgebungssystem und eine Atem-Synchronisationsvorrichtung umfasst, die es ermöglicht, eine Akquisitionssequenz des MRT-Bildgebungssystems mit der Atemfrequenz eines Patienten zu synchronisieren, sowie einen Rechner (K) und einen Speicher (M) umfasst, die es ermöglichen, die Schritte des Verfahrens aus einem der Ansprüche 1 bis 13 durchzuführen.

## Claims

1. Method for geometric characterization based on at least one first three-dimensional image (IM1) of the respiratory airways by means of MRI for the geometric characterization of at least one bronchi of a bronchial tree, the method comprising:
• a direct acquisition (ACQ_IMG) of at least one first three-dimensional MRI image (IM1) of a lung based on a direct 3D filling of the Fourier space and an MRI acquisition sequence of the at least one first three-dimensional MRI image (IM1) of a lung synchronized with the respiratory rate of a patient;
• filtering (F) the first three-dimensional image (IM1) to increase the signal-to-noise ratio;
• a segmentation (SEG) of a part of the filtered image (IM2) to generate a segmented three-dimensional image (IM3) comprising the contours of the bronchial tree (AB) and its inner volume part;
• an estimate (EST PC) of at least one cutting plane (pₖ) of a bronchi (bₚ), each cutting plane (pₖ) being locally orthogonal to the bronchi;
• Generation of at least one sectional image (IMG CP), each sectional image (IM5ₚₖ) comprising a section of a bronchi (b_{p);}
• an estimate for each slice image (IM5ₚₖ):
∘ an area (52) within the bronchial wall of the sectional image (IM5ₚₖ) and/or;
∘ a bronchial wall thickness (51) of the cross-sectional image (IM5ₚₖ),
• wherein the MRI acquisition sequence of the at least one first three-dimensional image (IM1) is defined by ultrashort echo time MRI and comprises the acquisition of a plurality of MRI images obtained by isotropic 3D acquisition of image data in a 3D Fourier space starting from a center of the 3D Fourier space to achieve a repetition of the center of the 3D Fourier space during the direct (ACQ_IMG) acquisition of at least one first three-dimensional image (IM1) by MRI of a lung.

2. Method according to claim 1, **characterized in that** it comprises:
• a skeletonization (SQT) of the segmented image (IM3) to generate a skeleton (IM4) comprising a series of branches, each branch being associated with a bronchi (bₚ).

3. Method according to claim 2, **characterized in that** the skeletonization (SQT) of the segmented image (IM3) comprises:
• a construction of a Voronoi diagram from the segmented three-dimensional image (IM3) defining a plurality of Voronoi cells from a pattern of points of the segmented image (IM3);
• a determination of the covariance matrix of the Voronoi cells;
• generating a set of branches obtained from the covariance matrix and defining a skeleton.

4. Method according to claim 2, **characterized in that** the skeletonization comprises a homotopic rejuvenation process of the segmented image (IM3).

5. Method according to one of claims 1 to 4, **characterized in that** the MRI acquisition sequence is further defined by a double acquisition in the space 5 of the frequencies of the information contained in the received echoes, combining:
• an acquisition of a radially defined image in an area defining the perimeter of a zone of interest;
• an acquisition of a Cartesian image defined point by point in the area of interest.

6. Method according to one of claims 1 to 5, **characterized in that** the filtering of the first image (IM1) is carried out using a median filter and/or an anisotropic filter in order to obtain a filtered image (IM2).

7. Method according to one of claims 1 to 6, **characterized in that** the filtering comprises the application of a filter which combines colorimetric information and geometric information of the first image (IM1) from at least one estimator to obtain a filtered image (IM2).

8. Method according to one of claims 1 to 7, **characterized in that** the segmentation (SEG) of a part of the filtered image (IM2) comprises the application of a shape recognition method based on a mathematical-morphological technique which involves a separation of the tubular shapes from the rest of the filtered image (IM2).

9. Method according to one of claims 1 to 8, **characterized in that** the segmentation (SEG) of all or part of the filtered image (IM2) comprises:
• a selection of one or more voxels, called a kernel, and the setting of a tolerance threshold for a similarity criterion of a characteristic size of voxels;
• an automatic propagation of a voxel range lying within the value range of the predefined tolerance until at least one boundary defined by a group of voxels whose characteristic size does not satisfy the similarity criterion is reached;
• an extraction of this voxel area to generate a segmented image (IM3); where the similarity criterion is selected from colour, contrast, saturation, hue, brightness or a combination of these criteria;
where the characteristic quantity is selected from a mean or a standard deviation with respect to a mean or median.

10. Method according to claim 9, **characterized in that** the following steps:
• Selecting one or more voxels and;
• the automatic expansion of a voxel area
performed multiple times on multiple areas of the filtered image (IM2) until the voxel area is extracted to generate a segmented image (IM3).

11. Method according to one of claims 1 to 10, **characterized in that** the segmentation (SEG) comprises a cropping (R) of a relevant region of the filtered image (IM2), wherein the relevant region comprises the bronchial tree in 3D.

12. Method according to one of claims 2 to 11, **characterized in that** the estimation of a cutting plane (EST PC) of a branch (11', 10', 101') is carried out locally at a selected point of the skeleton by:
• Selection of the Voronoi cells surrounding the current cell of the selected point;
• Measuring the eigenvalues of each eigenvector defined between the selected point and a point of a neighboring cell;
• Selection of the two largest values of orthogonal eigenvectors;
• Creating a cutting plane that is locally perpendicular to the branch axis in the direction of one of the two eigenvectors.

13. Method according to claim 1, **characterized in that** the estimation of a cutting plane (EST PC) of a bronchi is performed locally from the segmented three-dimensional image (IM3), wherein the estimation of a cutting plane (EST PC) comprises a definition of a set of Voronoi cells at points of the segmented volume, wherein a discrete estimation function applied to the parameters of the Voronoi cells generates a cutting plane that is locally orthogonal to the volume.

14. A system for three-dimensional segmentation of the airways of the lungs, **characterized in that** it comprises an MRI imaging system and a respiratory synchronization device that allows an acquisition sequence of the MRI imaging system to be synchronized with the respiratory rate of a patient, as well as a computer (K) and a memory (M) that allow the steps of the method of any one of claims 1 to 13 to be carried out.
